# EUROPEAN PATENT APPLICATION

(11) **EP 4 821 747 A1**
(43) Date of publication of application: **14.10.2026**
(21) Application number: 25889877.4
(22) Date of filing: 03.11.2025
(51) Int. Cl.: B60L 53/30, B60L 53/53, H02M 7/12, H02M 7/00, B60L 53/37

(54) **POWER TRANSFER APPARATUS AND ELECTRIC VEHICLE CHARGING APPARATUS COMPRISING SAME**

(30) Priority: 06.11.2024 KR 20240155817; 28.10.2025 KR 20250157309
(71) Applicant: LG Energy Solution, Ltd., Seoul 07335 (KR)
(72) Inventor: KWON, Seong Hyun, Daejeon 34122 (KR); KIM, Dong Myung, Daejeon 34122 (KR); KIM, Hyung Sik, Daejeon 34122 (KR); KIM, Hyun Tae, Daejeon 34122 (KR); PARK, Sunghee, Daejeon 34122 (KR)
(74) Representative: BCKIP Part mbB
(86) International application number: PCT/KR2025/017788
(87) International publication number: WO 2026/101146

(57) **Abstract**

An electric vehicle charging apparatus according to one embodiment of the present invention comprises one or more chargers that receive power through a power transfer apparatus. The power transfer apparatus comprises: one or more bus bar pairs including a positive electrode bus bar and a negative electrode bus bar; and a connection unit connectable to one or more power-requiring apparatuses, wherein the bus bar pairs are formed along at least a portion of an inner upper edge of the electric vehicle charging apparatus.

## Description

### [Technical Field]

This application claims priority to and the benefit of Korean Patent Application No. 10-2024-0155817 filed with the Korean Intellectual Property Office on November 6, 2024, and Korean Patent Application No. 10-2025-0157309 filed with the Korean Intellectual Property Office on October 28, 2025, the entire contents of which are incorporated herein by reference.

The present disclosure relates to a power transmission device and a charging apparatus including the same, and more specifically, to a power transmission device having a power delivery structure in the form of a busbar and an electric vehicle charging apparatus including the same.

### [Background Art]

Recently, consumer interest and demand for electric vehicles (EVs), which are emerging as the most effective alternative for reducing greenhouse gas emissions and improving energy efficiency, are increasing. Unlike conventional internal combustion engine vehicles, EVs require components such as batteries, electric motors, inverters, converters, and Battery Management Systems (BMS).

Rechargeable secondary batteries are primarily used for electric vehicle batteries. Secondary batteries, which can be recharged and reused after use, are manufactured as battery modules or battery packs by connecting multiple battery cells in series according to the output capacity required by the device, and are used as a power source for various devices. Secondary batteries are used in diverse fields, ranging from small, advanced electronic devices like smartphones to electric bicycles, electric vehicles, and Energy Storage Systems (ESS) for the power grid.

A prerequisite for the widespread adoption of electric vehicles is establishing a charging infrastructure, including EV charging stations. EV charging stations installed at rest areas and similar locations typically receive power directly from the grid to provide rapid charging for electric vehicles. Energy Storage Systems (ESS) are sometimes installed to ensure stable power supply for these rapid EV charging stations. To ensure the business viability of charging services using ESS, minimizing the installation area and maximizing available energy are critical factors.

To address this, AC-based cable-connected container-type EV charging stations were previously used. However, this type of charging station employs a one-to-one cable connection method between components within the station, presenting significant constraints in terms of space utilization.

### [Detailed Description of the Invention]

### [Technical Problem]

To obviate one or more problems of the related art, embodiments of the present disclosure provide a power transmission device having a busbar-type power delivery structure.

To obviate one or more problems of the related art, embodiments of the present disclosure also provide a charging apparatus including the power transmission device.

### [Technical Solution]

In order to achieve the objective of the present disclosure, a power transmission device may include one or more busbar pairs comprising a positive busbar and a negative busbar; and a connecting part connectable to one or more power-requiring devices, and the busbar pair is formed along at least a portion of edges of the upper side within a device where the power transmission device is installed.

The busbar pair is connected to a power conversion device configured to convert Alternating Current (AC) power input from the grid into Direct Current (DC) power and to supply the DC power to the power transmission device.

The connecting part may include a pair of first connection terminals and a pair of second connection terminals having an inwardly curved shape.

Each of the pair of first connection terminals and the pair of second connection terminals may be electrically connected to the positive terminal or negative terminal of a power-requiring device which is inserted between a pair of connection terminals.

The one or more busbar pairs may be supported by one or more support insulators disposed on the underside of each busbar.

The power-requiring device may include one or more of a power conversion device, an energy storage device, and a charger.

The power transmission device may further include a first space section for accommodating the busbar pair and the support insulators and a second space section for accommodating one or more communication cables, and the first space portion and the second space portion are partitioned by a partition made of insulating material.

According to another embodiment of the present disclosure, an electric vehicle (EV) charging apparatus may include a power transmission device and one or more chargers supplied with power through the power transmission device, and the power transmission device may include one or more busbar pairs comprising a positive busbar and a negative busbar; and a connecting part connectable to one or more power-requiring devices, wherein the busbar pair is formed along at least a portion of edges of the upper side within a device where the power transmission device is installed.

The EV charging apparatus may further include an energy storage device (ESS) for storing power transmitted through the power transmission device; and a charge/discharge controller, connected to the energy storage device and the one or more chargers, configured to control charge/discharge to the energy storage device and power supply to the one or more chargers.

The charge/discharge controller may receive a charging request of using the charger and provide power supplied from one or more of the grid and the energy storage device to the charger corresponding to the charging request.

The charge/discharge controller may charge the energy storage device using power supplied from the grid according to a preset condition.

The EV charging apparatus may further include a power conversion device configured to convert Alternating Current (AC) power input from the grid into Direct Current (DC) power and supply the power to the power transmission device.

The connecting part may include a pair of first connection terminals and a pair of second connection terminals having an inwardly curved shape.

Each of the pair of first connection terminals and the pair of second connection terminals may be electrically connected to the positive terminal or negative terminal of a power-requiring device which is inserted between a pair of connection terminals.

The one or more busbar pairs may be supported by one or more support insulators disposed on the underside of each busbar.

The power-requiring device may include one or more of a power conversion device, an energy storage device, and a charger.

The power transmission device may further include a first space section for accommodating the busbar pair and one or more support insulators supporting the busbar pair and a second space section for accommodating one or more communication cables, and the first space portion and the second space portion are partitioned by a partition made of insulating material.

The power transmission device and the EV charging apparatus may be configured as an integrated container form.

### [Advantageous Effects]

According to embodiments of the present disclosure which provides a busbar-integrated container-type charging apparatus, it is possible to simplify the connection structure between components and resolve issues with cable connection methods, thereby enabling simplified management operations.

Furthermore, configuring the system on a DC basis reduces the number of required components and consequently, the additional space gained can be utilized to add energy storage devices, thereby maximizing the available energy.

### [Brief Description of the Drawings]

FIG. 1 is a conceptual diagram of a general electric vehicle charging infrastructure.
FIG. 2 is a diagram illustrating the configuration of an electric vehicle's on-board/off-board charging system.
FIG. 3 is a block diagram of an AC-based cable-connected container-type electric vehicle charging station.
FIG. 4 is a block configuration diagram of a DC-based busbar-connected container-type electric vehicle charging apparatus according to embodiments of the present disclosure.
FIG. 5 is a cross-sectional view of the power transmission device according to embodiments of the present disclosure.
FIG. 6 is a top view of the busbar in a power transmission device according to embodiments of the present disclosure.
FIG. 7 is a cross-sectional view of the busbar connection according to embodiments of the present disclosure.
FIG. 8 is a block diagram of an electric vehicle charging apparatus according to another embodiment of the present disclosure.

- 400:: Electric vehicle charging apparatus
- 410:: Power conversion device (SST)
- 420:: Energy storage device
- 440:: Electric vehicle charger
- 450:: Power transmission device
- 451:: Busbar Conductor Section
- 452:: Support insulator
- 460:: Busbar Connecting part
- 461:: First connection terminal
- 462:: Second connection terminal

### [Best Modes for Practicing the Disclosure]

The present disclosure may be modified in various forms and have various embodiments, and specific embodiments thereof are shown by way of example in the drawings and will be described in detail below. It should be understood, however, that there is no intent to limit the present disclosure to the specific embodiments, but on the contrary, the present disclosure is to cover all modifications, equivalents, and alternatives falling within the spirit and technical scope of the present disclosure. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present disclosure. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present disclosure belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, example embodiments of the present disclosure will be described in detail with reference to the accompanying drawings.

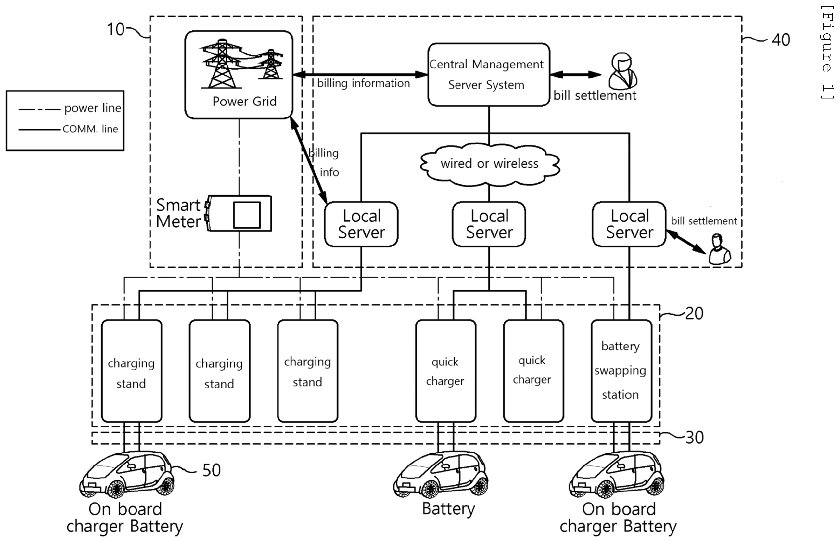

FIG. 1 is a conceptual diagram of a general electric vehicle charging infrastructure.

The electric vehicle charging infrastructure is a system designed to enable inexpensive and convenient electric vehicle charging in apartment or public facility parking lots. It is a term encompassing all hardware and software related to charging electric vehicle batteries. Referring to FIG. 1, the charging infrastructure may generally include power supply equipment 10, a charger 20, a charging interface 30, and an information system 40.

The power supply equipment 10 is the electrical equipment supplying power to the charger and may include transmission and distribution infrastructure, electricity meters, wiring, distribution panels, and circuit breakers. The charger 20 is the facility equipped with a user interface that receives power and supplies electricity to the electric vehicle in Alternating Current (AC) or Direct Current (DC) form.

Meanwhile, EV charging methods can be broadly categorized into direct (cable) charging, contactless charging, and battery swapping or battery exchange. Direct charging method involves connecting a plug to the electric vehicle to supply energy via AC or DC. The battery exchange method involves either charging infrastructure operators purchasing batteries and leasing them to users, or the operator directly managing the exchange, and this method may use automated battery exchange stations. The contactless charging method delivers power to the electric vehicle's receiver pad via magnetic induction/resonance from a transmitter pad, which is a high-frequency power supply device embedded in the parking surface or the road.

Chargers 20 using direct charging are categorized as on-board chargers or off-board chargers based on whether they are installed in the electric vehicle. Chargers may also be classified by purpose into Home, Standard, and Quick (or fast) chargers. On-board Chargers are installed inside the electric vehicle, offering the advantage of charging anywhere with a power source. However, their weight and installation space constraints limit their power capacity. Conversely, off-board chargers have no restrictions on power capacity or installation space.

A fast charger supplies the necessary power to the vehicle's battery by converting AC power from the utility grid to DC power or converting DC power from renewable energy sources via DC/DC conversion, and charging speeds are faster since the rectifier and DC/DC converter are separated into an external charging system. Standard chargers (the charging stand in FIG. 1) require an on-board charger with an integrated rectifier and DC/DC converter within the vehicle for power conversion, and charging speeds are slow since the vehicle's structure only allows for low-capacity conversion.

Meanwhile, the charging interface 30 is a device that connects power and communication to the electric vehicle, including cables and plugs that connect the charger to the electric vehicle, as well as wireless transmission pads. Here, the plug is the charging connector inserted into the charging socket at the charging station, also called an infrastructure charging plug. The connector is the charging connector inserted into the EV's charging inlet, also called a vehicle charging connector. The EV's inlet is the charging socket where the vehicle charging connector is inserted, also called the vehicle charging inlet.

Furthermore, the charging infrastructure information system 40 is an information system that provides users with information such as the type, status, location, and usage details of chargers. It also handles the overall operation and management of the charging infrastructure, including charger operation control, user management and information provision, billing, and payment. The charging infrastructure information system 40 may include a central management server and one or more local servers located on wired or wireless networks.

The form of the electric vehicle charging infrastructure shown in FIG. 1 is the most common form. Depending on the type of vehicle requiring charging and the characteristics of the location where the charger is situated, the charging infrastructure can be provided in various modified forms.

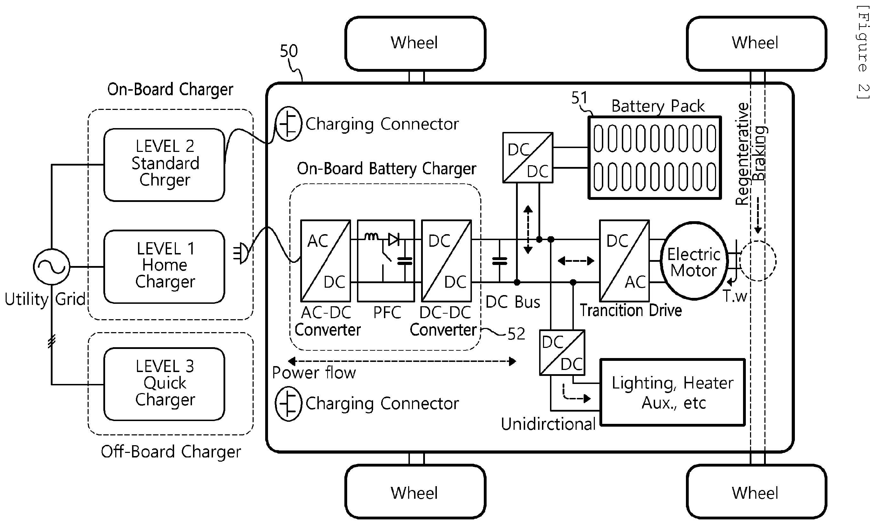

FIG. 2 is a diagram illustrating the configuration of an electric vehicle's on-board/off-board charging system.

Electric vehicles can be classified into types such as Hybrid Electric Vehicle (HEV), Plug-in Hybrid Electric Vehicle (PHEV), Electric Vehicle (EV), and Fuel Cell Electric Vehicle (FCEV), depending on the type of power source used and the type of battery.

Hybrid Electric Vehicle (HEV) refers to vehicles using two power sources, typically combining a conventional engine with battery-based electrical energy. Unlike HEVs, Plug-in Hybrid Electric Vehicles (PHEVs), charge their batteries externally, and the battery plays the primary role during both starting and driving, with the engine only providing auxiliary support when the battery is discharged. An electric vehicle (EV) is an electric car that removes the engine by increasing the battery capacity of a PHEV. A Fuel Cell Electric Vehicle (FCEV) is characterized by its primary power source being a fuel cell that generates its own electrical energy, rather than an externally charged battery.

Batteries used in electric vehicles 50 must satisfy conditions of high energy density to increase vehicle range and the ability to undergo more than a specified number of full discharge cycles. Nickel-metal hydride (Ni-MH) batteries and lithium polymer batteries, which possess sufficient power density and reasonable charge/discharge energy efficiency characteristics, are primarily used as batteries for electric vehicles. Batteries are typically installed in vehicles in the form of a battery pack 51, which includes battery modules and a Battery Management System (BMS).

The BMS manages driving range prediction, full charge, overcharge prevention, and cell equalization algorithms. The BMS may also include functions for managing battery cell or module failures and providing battery replacement alerts based on battery life prediction. To perform these operations, the BMS monitors the current, voltage, and temperature of the battery cells or modules, incorporating various components such as fuses, current sensing devices, thermistors, switches, and balancers.

The battery pack 51 may power the electric motor through an inverter (or AC/DC converter) installed in the vehicle, thereby driving the vehicle. The BMS of the battery pack may communicate with the ECU and VCU within the vehicle body using communication methods such as the CAN protocol. The BMS reports battery status information to the vehicle and may control the connection status between the vehicle and the battery based on the vehicle's operating information. When vehicle operation ends, the BMS may receive a vehicle operation termination signal from the vehicle's ECU or VCU and stop the power supply being delivered from the battery modules to the vehicle.

For such vehicle operation, control actions are required, including motor drive control, regenerative braking control, air conditioning load control, and control of the electrical load power supply (12V). A vehicle may include a plurality of Electronic Control Units (ECUs) for these control operations. Among these ECUs, the top-level controller responsible for overall vehicle operation and control is referred to as the Vehicle Control Unit (VCU).

Meanwhile, the numerous ECUs within a vehicle may communicate with each other via the CAN bus. Controller Area Network (CAN) communication is a standard communication protocol designed for microcontrollers and devices to communicate with each other within a vehicle without a host computer. CAN communication is a message-based network protocol using a non-host bus architecture, primarily used for communication between controllers and is widely employed in vehicles.

Referring to FIG. 2, chargers may be categorized as on-board chargers or off-board chargers based on whether they are installed in the electric vehicle. Chargers may further be classified by purpose into Home, Standard (relatively slow), and Quick (relatively fast or rapid) chargers. On-board chargers may include Standard chargers and Home chargers. A quick charger is an off-board charger with a power level of 50[kW] or higher, primarily used at electric vehicle charging stations to replenish insufficient power in a short time.

Meanwhile, the on-board charger 52 installed within the electric vehicle comprises an AC/DC converter, a Power Flow Controller (PFC), and a DC/DC converter. the on-board charger may convert AC power supplied from the grid or an equivalent power supply device into DC power at an appropriate level for output. The on-board charger 52 may supply power by connecting to a DC/DC converter linked to the battery pack via a DC bus, an AC/DC converter connected to the electric motor, and a DC/DC converter connected to the electrical equipment.

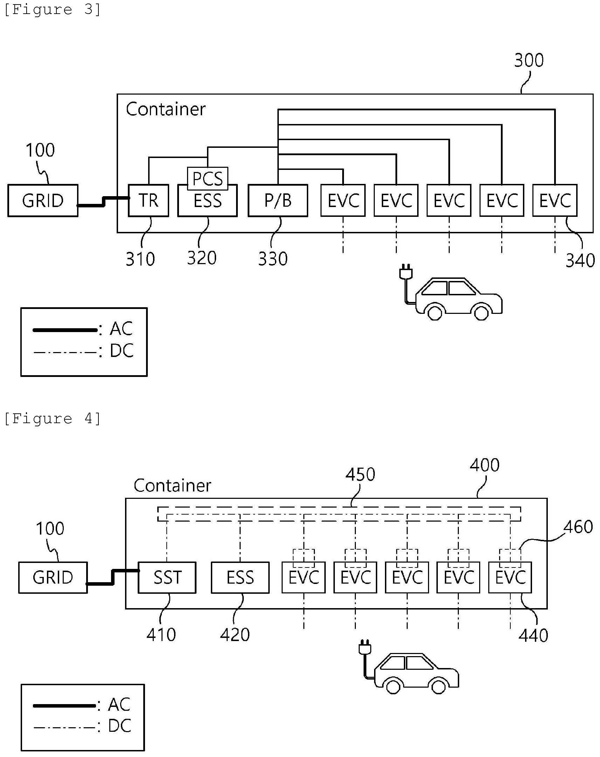

FIG. 3 is a block diagram of an AC-based cable-connected container-type electric vehicle charging station.

Energy Storage Systems (ESS) installed to ensure stable power supply for EV charging stations are primarily deployed in urban areas with high foot traffic or on highways, where space is limited. Therefore, minimizing the installation area and maximizing available energy are critical factors for ensuring the business viability of charging services using ESS. For this reason, when ESS is applied to EV charging stations, it is often provided in a container-type configuration as shown in FIG. 3.

Referring to FIG. 3, an AC-based cable-connected container-type EV charging station 300 comprises a power converter 310, an ESS 320, a power bank 330, and a fast charger 340. In this structure, AC power supplied from the power grid 100 enters the power converter 310 via an overcurrent protection panel.

The power converter 310 steps down the electrical energy received from the power grid 100. For example, the power converter 310 receives 22.9kV electricity and steps it down to 380V. The power output from the power converter 310 may either be stored in the ESS 320 or supplied to the fast charger 340 via the power bank 330, which handles power distribution. Here, the power bank 330 handles the transformation and current conversion functions for distributing power to the fast chargers 340. Meanwhile, the ESS 320 may store energy supplied from the power grid. To do this, the ESS 320 may be configured to include a Power Conversion System (PCS) that converts AC-based power into DC power.

In other words, an AC-based cable-connected container-type EV charging station supplies power from the AC grid to the DC fast charger, and then charges the EV battery by AC/DC converting the power supplied from the DC fast charger.

Such container-type EV charging stations face significant constraints in terms of space utilization. Specifically, each component within the charging station is connected via a one-to-one cable connection method. Consequently, as the number and installation capacity of components increase, the number and thickness of cables also increase. Here, component layout design considering the appropriate curvature radius based on the number and thickness of cables is necessary, along with the corresponding appropriate spacing. Therefore, constraints on efficient space utilization and layout configuration are inevitable.

To solve these problems, the present disclosure provides a busbar-integrated container-type charging apparatus to eliminate the issues of the cable connection method and maximizes usable energy by configuring the system on a DC basis.

FIG. 4 is a block configuration diagram of a DC-based busbar-connected container-type electric vehicle charging apparatus according to embodiments of the present disclosure.

The DC-based busbar-connected container-type electric vehicle charging apparatus 400 according to embodiments of the present disclosure is an apparatus configured to provide electric vehicle charging services using a power transmission device 450 installed in the upper part in the container. The power transmission device 450 may be provided in a busbar form. The power transmission device 450 may be installed along at least a portion of the edges of the upper side within the container and may be integrally formed with the container.

In the present disclosure, the power transmission device 450 may deliver DC power to an energy storage device 420 or one or more electric vehicle chargers 440 via a power conversion device (e.g., SST: Solid State Transformer) 410 that converts AC power supplied from the grid 100 and supplies power.

As will be discussed later, the power transmission device 450 may be provided in the form of a busbar pair comprising a positive busbar 4511 and a negative busbar 4512, and may be configured to include a connecting part 460 capable of connecting to one or more power-requiring devices. The power transmission device 450 may be formed along at least a portion of the edges of the upper side inside the device (e.g., the container in Fig. 4; the electric vehicle charging apparatus) where the power transmission device 450 is installed, as shown in Fig. 4.

Meanwhile, the power transmission device 450 may deliver power to one or more power-requiring devices via the connecting part 460. Here, the power-requiring devices may include one or more of a Solid State Transformer (SST), an Energy Storage System (ESS), and an Electric Vehicle Charger (EVC).

In embodiments of the present disclosure, the power conversion device may convert alternating current (AC) power input from the grid into DC power and supply it to the busbar. The power conversion device 410 may also change the voltage of the power input from the grid as needed and supply it.

Here, an SST, which can be used as an example of a power conversion device, replaces conventional passive low-frequency transformers with power conversion devices utilizing power electronics technology. The SST may reduce size and weight, compensates for reactive power, and perform an uninterrupted power supply (UPS) function utilizing an energy storage device. The SST may operate at high voltage levels and is isolated using intermediate frequency or high-frequency transformers. The SST can perform AC/DC or DC/AC conversion.

Meanwhile, the ESS 420 in the embodiments, which performs the role of storing energy supplied from the grid, can be understood as comprising a battery rack including a plurality of battery packs, or a battery bank including plurality of battery racks. In other words, in this embodiment, the ESS 420 may be considered a large battery capable of storing energy supplied from the grid and then supplying it to one or more electric vehicle chargers 440. Here, a battery pack may also be referred to as a battery module. Furthermore, a Battery Management System (BMS) may be installed in each battery rack or bank. Here, the Battery Management System can monitor the current, voltage, and temperature of each battery pack, rack, or bank.

Additionally, the electric vehicle charger 440 may receive DC power delivered via a power transmission device 450 to charge the required electric vehicle. Here, the electric vehicle charger 440 may take the form of a DC/DC converter. It can also charge the electric vehicle by converting the DC power supplied via the busbar 450 from one or more charging sources-such as grid supply power and power stored in the ESS-to a level suitable for the electric vehicle.

In summary, the electric vehicle charging apparatus 400 according to embodiments of the present disclosure is an electric vehicle charging apparatus comprising one or more chargers supplied with power via a power transmission device, wherein the power transmission device may include one or more busbar pairs comprising a positive busbar and a negative busbar; and a connecting part connectable to one or more power-requiring devices, wherein the busbar pair is formed along at least a portion of the edges of the upper side in a device where the power transmission device is installed.

The electric vehicle charging apparatus may further include a power conversion device that converts Alternating Current (AC) power input from the grid into Direct Current (DC) power and supplies it to the power transmission device; and an energy storage device (ESS) that stores power delivered through the power transmission device.

The connecting part may include a pair of first connection terminals and a pair of second connection terminals having an inwardly curved shape.

Each of the pair of first connection terminals and the pair of second connection terminals may be electrically connected to the positive terminal or negative terminal of a power-requiring device which is inserted between a pair of connection terminals.

The one or more busbar pairs may be supported by one or more support insulators disposed on the underside of each busbar.

The power-requiring device may include one or more of a power conversion device, an energy storage device, and a charger.

The power transmission device may further include a first space section for accommodating the busbar pair and one or more support insulators supporting the busbar pair and a second space section for accommodating one or more communication cables, and the first space portion and the second space portion are partitioned by a partition made of insulating material.

The power transmission device and the EV charging apparatus may be configured as an integrated container form.

The electric vehicle charging apparatus 400 may further include a power conversion device or an SST 410, an ESS 420, a processor for managing and controlling one or more chargers 440, a communication module for communicating with an external network, and a memory, etc.

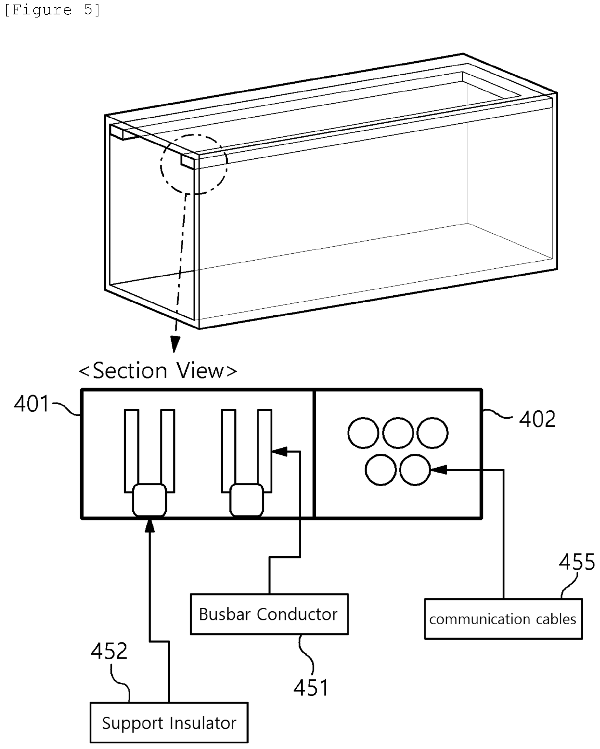

FIG. 5 is a cross-sectional view of the power transmission device according to embodiments of the present disclosure.

The power transmission device 450 according to embodiments of the present disclosure may be configured to include: one or more busbar pairs comprising a positive busbar and a negative busbar; and a connecting part connectable to one or more power-requiring devices. Here, the busbar pair may be formed along at least a portion of the edges of the upper side in the device (electric vehicle charging apparatus) where the power transmission device is installed and may be integrally formed with the device. The busbar pair is provided as a conductor to deliver power on the busbar.

Referring to FIG. 5, the power transmission device 450 according to embodiments of the present disclosure may be configured to include a first space section 401 accommodating a busbar conductor section 451; and a second space section 402 accommodating communication cables. Here, the first space and the second space may be partitioned by a partition made of an insulating material.

The first space section 401 may accommodate a busbar conductor section 451 including a positive busbar and a negative busbar. The first space section 401 may also accommodate one or more support insulators 452 positioned beneath each busbar to support the busbar conductor section 451. According to one embodiment, a single support insulator 452 may be implemented to support a pair of busbars, i.e., a busbar pair. Here, the busbar pair may be connected via a connecting part to a power conversion device that converts Alternating Current (AC) power input from the grid into Direct Current (DC) power and supplies it to the power transmission device.

Meanwhile, a portion of the bottom surface of the first space section 401 may be configured to include a structure, such as a through hole, allowing a branching section where the busbar branches to be connected to the connecting part 460 for connection to power-requiring devices. Furthermore, the second space section 402 may accommodate communication cables 455 for various devices housed within the device where the power transmission device is installed.

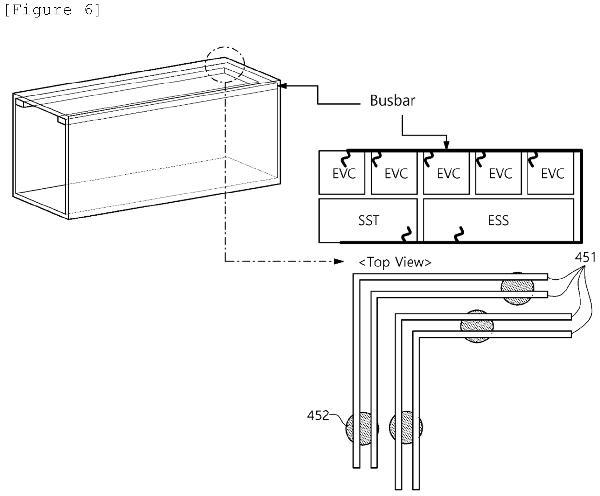

FIG. 6 is a top view of the busbar in a power transmission device according to embodiments of the present disclosure.

FIG. 6 shows a top view of the container-type electric vehicle charging apparatus. The power transmission device 450 according to embodiments of the present disclosure may be branched via connecting parts to match the positions of the components (power-requiring devices) within the electric vehicle charging apparatus. The connecting part 460 may be provided in a structure that can be movably positioned along the busbar body section and fixed at predetermined positions set by a user. The busbar conductor section 451 may be supported by a support insulator 452. According to an embodiment, a single support insulator 452 may be implemented to support a pair of busbars, i.e., a busbar pair.

Here, the components of the electric vehicle charging apparatus connected to the busbar conductor portion may include one or more of an SST, an energy storage device, and an electric vehicle charger. In other words, the busbar conductor portion may be connected to the SST, the energy storage device, or the electric vehicle charger via the connecting part.

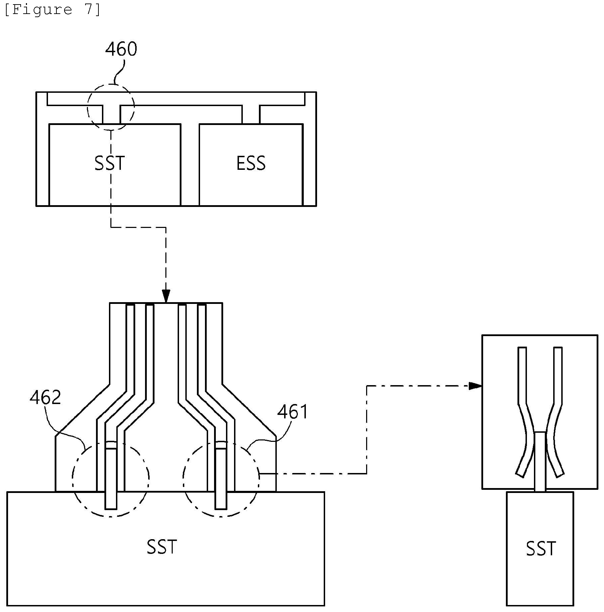

FIG. 7 is a cross-sectional view of the busbar connection according to embodiments of the present disclosure.

Referring to FIG. 7, the connecting part 460 may be configured to branch out and protrude from the body portion of the power transmission device 450. The connecting part (or a busbar connecting part) 460 may be provided with a structure that can be movably arranged along the busbar body portion and fixedly installed at a predetermined position set by the user.

Here, the connecting part 460 may include a pair of first connection terminals 461 having an inwardly curved shape and a pair of second connection terminals 462 having an inwardly curved shape. A pair of first connection terminals or a pair of second connection terminals may be electrically connected to the positive terminal or negative terminal of a power-requiring device inserted between the pair of connection terminals. For example, a pair of first connection terminals may be connected to the positive terminal of the power-requiring device, and a pair of second connection terminals may be connected to the negative terminal of the power-requiring device. Through the inwardly curved shape of the first connection terminal 461 and the second connection terminal 462, connection between the busbar connecting part and the power-requiring device can be more readily implemented without separate devices (e.g., bolts).

Here, the power-requiring device may be a Solid State Transformer (SST) as shown in FIG. 7, an Energy Storage System (ESS), or an Electric Vehicle (EV) charger.

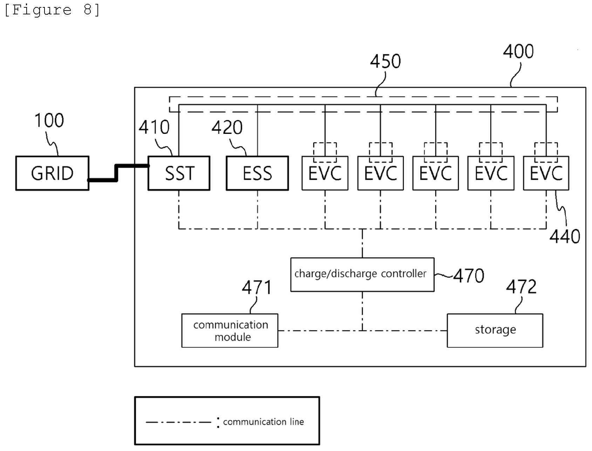

FIG. 8 is a block configuration diagram of an electric vehicle charging apparatus according to another embodiment of the present disclosure.

As previously described, the electric vehicle charging apparatus 400 may be configured to include: one or more busbar pairs comprising a positive busbar and a negative busbar; and a power transmission device 450 comprising a connection section connectable to one or more power-requiring devices. Here, the busbar pair may be formed along at least a portion of the edges of the upper side inside the electric vehicle charging apparatus.

Here, the power transmission device 450 may deliver DC power to an energy storage device 420 or one or more electric vehicle chargers 440 via a power conversion device 410 that converts and supplies AC power supplied from the grid 100.

Referring to FIG. 8, the electric vehicle charging apparatus 400 may be connected to a power conversion device 410, an energy storage device 420, and one or more chargers 440. The electric vehicle charging apparatus may further include a charge/discharge controller 470 that manages and controls these components, a communication module 471 that communicates with external networks, a storage 472, an input interface, and an output interface. Each component included in the electric vehicle charging apparatus 400 may be connected via a bus, etc., to communicate with each other.

Here, the energy storage device 420 may store power delivered via the power transmission device. The charge/discharge controller 470 is connected to the energy storage device and one or more chargers, enabling it to control the charging/discharging of the energy storage device and the power supply to the one or more chargers.

More specifically, the charge/discharge controller 470 may charge the energy storage device using power provided from the grid according to preset conditions. In other words, the charge/discharge controller 470 may supply grid power, supplied via the power conversion device 410 and the power transmission device 450, to the energy storage device 420 to charge the energy storage device 420. For example, the charge/discharge controller 470 may charge the energy storage device 420 using grid power during times when electricity rates are low, such as late at night.

The charge/discharge controller 470 may also receive a charging request using one or more chargers and provide power supplied from one or more of the grid and the energy storage device to the charger corresponding to the charging request.

More specifically, when grid power is available, the charge/discharge controller 470 may directly provide power supplied from the grid to an electric vehicle charger to charge one or more electric vehicles requesting charging.

The charge/discharge controller 470 may also receive charging requests from multiple electric vehicle users. If the user requirements (charging demand, charging time, etc.) cannot be met using only grid power, it can provide power to the electric vehicle chargers 440 in real time, combining both power supplied from the grid and power previously stored in the energy storage device 420. The charge/discharge controller 470 may also provide power stored in the energy storage device 420 to the EV charger 440 for which a usage request was received, even during emergencies such as power outages when grid power is unavailable.

Meanwhile, the charge/discharge controller 470 may refer to a central processing unit (CPU), a graphics processing unit (GPU), or a dedicated processor on which the methods according to embodiments of the present disclosure are performed. Furthermore, the storage 472 may comprise at least one of volatile storage media and non-volatile storage media. For example, the storage 472 may comprise at least one of read-only memory (ROM) and random access memory (RAM).

The communication module 471 may be equipped with a module capable of communicating via various communication methods, such as wired communication, short-range communication, and cellular communication, enabling communication with external devices, such as a server within a network managing multiple electric vehicle charging apparatus 400.

The embodiments of the present disclosure described through the above embodiments provide a busbar-integrated container-type charging device, simplifying the connection structure between components and resolving issues with cable connection methods, thereby enabling simplified management operations.

Furthermore, configuring the system on a DC basis reduces the number of required components. This frees up additional space, allowing for the addition of energy storage devices to maximize usable energy.

Moreover, by incorporating an energy storage device that charges efficiently through a power transmission device with a simple structure, it is possible to supply power smoothly to electric vehicles requesting charging during peak power demand periods by utilizing not only grid power but also power stored in the energy storage device.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present disclosure has been described with reference to the example embodiment of the present disclosure, but those skilled in the art may appreciate that the present disclosure may be variously corrected and changed within the range without departing from the spirit and the area of the present disclosure described in the appending claims.

## Claims

1. A power transmission device comprising:
one or more busbar pairs comprising a positive busbar and a negative busbar; and
a connecting part connectable to one or more power-requiring devices,
wherein the busbar pair is formed along at least a portion of edges of the upper side within a device where the power transmission device is installed.

2. The power transmission device of claim 1, wherein the busbar pair is connected to a power conversion device configured to convert Alternating Current (AC) power input from the grid into Direct Current (DC) power and to supply the DC power to the power transmission device.

3. The power transmission device of claim 1, wherein the connecting part includes:
a pair of first connection terminals and a pair of second connection terminals having an inwardly curved shape.

4. The power transmission device of claim 3, wherein each of the pair of first connection terminals and the pair of second connection terminals are electrically connected to the positive terminal or negative terminal of a power-requiring device which is inserted between a pair of connection terminals.

5. The power transmission device of claim 1, wherein the one or more busbar pairs are supported by one or more support insulators disposed on the underside of each busbar.

6. The power transmission device of claim 1, wherein the power-requiring device includes one or more of a power conversion device, an energy storage device, and a charger.

7. The power transmission device of claim 5, further comprising:
a first space section for accommodating the busbar pair and the support insulators; and
a second space section for accommodating one or more communication cables,
wherein the first space section and the second space section are partitioned by a partition made of an insulating material.

8. An electric vehicle (EV) charging apparatus comprising:
a power transmission device; and
one or more chargers supplied with power through the power transmission device,
wherein the power transmission device includes:
one or more busbar pairs comprising a positive busbar and a negative busbar; and
a connecting part connectable to one or more power-requiring devices,
wherein the busbar pair is formed along at least a portion of edges of the upper side within a device where the power transmission device is installed.

9. The EV charging apparatus of claim 8, further comprising:
an energy storage device (ESS) for storing power transmitted through the power transmission device; and
a charge/discharge controller, connected to the energy storage device and the one or more chargers, configured to control charge/discharge to the energy storage device and power supply to the one or more chargers.

10. The EV charging apparatus of claim 9, wherein the charge/discharge controller receives a charging request of using the charger and provides power supplied from one or more of the grid and the energy storage device to the charger corresponding to the charging request.

11. The EV charging apparatus of claim 9, wherein the charge/discharge controller charges the energy storage device using power supplied from the grid according to a preset condition.

12. The EV charging apparatus of claim 9, further comprising:
a power conversion device configured to convert Alternating Current (AC) power input from the grid into Direct Current (DC) power and supply the power to the power transmission device.

13. The EV charging apparatus of claim 8, wherein the connecting part includes:
a pair of first connection terminals and a pair of second connection terminals having an inwardly curved shape.

14. The EV charging apparatus of claim 13, wherein each of the pair of first connection terminals and the pair of second connection terminals are electrically connected to the positive terminal or negative terminal of a power-requiring device which is inserted between a pair of connection terminals.

15. The EV charging apparatus of claim 8, wherein the one or more busbar pairs are supported by one or more support insulators disposed on the underside of each busbar.

16. The EV charging apparatus of claim 8, wherein the power-requiring device includes one or more of a power conversion device, an energy storage device, and a charger.

17. The EV charging apparatus of claim 8, wherein the power transmission device further includes:
a first space section for accommodating the busbar pair and one or more support insulators supporting the busbar pair; and
a second space section for accommodating one or more communication cables,
wherein the first space portion and the second space portion are partitioned by a partition made of insulating material.

18. The EV charging apparatus of claim 8, wherein the power transmission device and the EV charging apparatus are configured as an integrated container form.
